(19) **Europäisches Patentamt**
**European Patent Office**
**Office européen des brevets**

(11) **EP 4 538 735 A1**

(12) **EUROPEAN PATENT APPLICATION**

(43) Date of publication:
**16.04.2025 Bulletin 2025/16**

(51) International Patent Classification (IPC):
**G01S 7/40** (2006.01)   **G01S 13/02** (2006.01)
**G01S 13/06** (2006.01)   **G01S 13/08** (2006.01)

(21) Application number: **23203265.6**

(22) Date of filing: **12.10.2023**

(52) Cooperative Patent Classification (CPC):
**G01S 13/0209; G01S 7/4021; G01S 13/06;
G01S 13/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NXP B.V.**
**5656 AG Eindhoven (NL)**

(72) Inventors:
• **Rath, Michael**
**5656 AG Eindhoven (NL)**

• **Küchler, Wolfgang**
**5656 AG Eindhoven (NL)**
• **Lugitsch, David**
**5656 AG Eindhoven (NL)**

(74) Representative: **Krott, Michel**
**NXP B.V.**
**Intellectual Property & Licensing**
**High Tech Campus 60**
**5656 AG Eindhoven (NL)**

Remarks:
Amended claims in accordance with Rule 137(2)
EPC.

(54) **RADAR DEVICE WITH ENLARGED BANDWIDTH**

(57)    There is described a radar device (100), being a monostatic radar device, that comprises:
i) a first channel (121) with a first bandwidth, configured to receive a first radar signal;
ii) a second channel (122) with a second bandwidth, configured to receive a second radar signal, wherein the first frequency band and the second frequency band are different; and

iii) a control device (110), configured to:
a) obtain a first channel response associated with the received first signal at the first channel (121);
b) obtain a second channel response associated with the received signal at the second channel (122); and
c) combine the first channel response with the second channel response by channel stitching (112) to obtain a combined channel response (115).

Fig. 1

EP 4 538 735 A1

**Description**

TECHNICAL FIELD

The present disclosure relates to a radar device with at least two channels, each for a different bandwidth (frequency range). In particular, the radar device comprises a control device configured to combine a received radar signal from a first channel with a further received radar signal from a second channel by channel stitching. The disclosure further relates to a method of operating such a radar device. The disclosure may hence relate to the technical field of radar devices, in particular ultra-wideband (UWB) applications.

TECHNICAL BACKGROUND

Radar operations apply radio frequency (RF) signals/waves to determine spatial properties such as position, distance, angle, or velocity of a target (object or person or vehicle of interest). Thereby, a transmitter emits an RF signal towards the target, while one or more receivers obtain a reflection (an echo) of the RF signal that has been reflected by the target. For example, the ultra-wideband (UWB) wireless technology enables secure, accurate ranging with less than 5 cm accuracy, and can also be utilized as a radar device for receiving reflected signals from a target. For example, an UWB device can be used as an impulse radar, where a short duration pulse is transmitted, and its reflection is received. This reflection is captured as change in the channel impulse response (CIR) measured by the receiver.

However, the performance of radar systems may be generally limited by the bandwidth, for example in the case of UWB radar systems to the range of 0.5 to 1 GHz (for standardized IEEE channels). This limited bandwidth may influence i) the ranging accuracy of individual targets and/or ii) the ability to resolve targets close to each other (radar resolution).

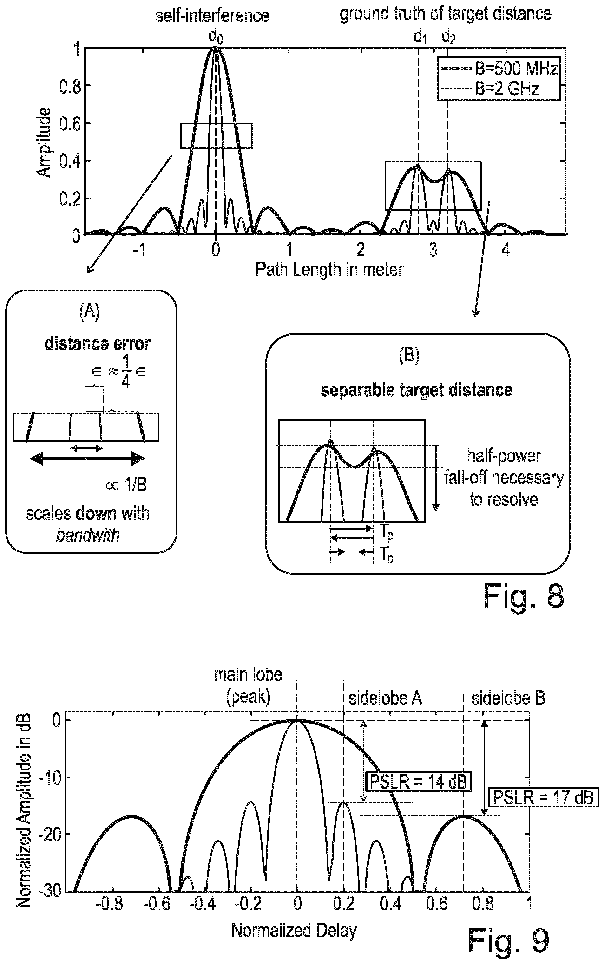

**Figure** 8 illustrates a channel response (radar multitap channel) from a conventional radar device. The y-axis shows the amplitude and the x-axis shows the path length (of the radar signal) in meters. At 0 meters ($d_0$) (i.e. at the radar device itself), there is observed a self-interference peak. This is due to the circumstance that the radar device is a monostatic radar device, wherein the transmitter and the receiver are arranged at the same entity, in other words: transmitter and receiver are co-located. Hereby, the transmitter can interfere with the associated receiver. At around a distance of 3 meters, there are two targets present (di, $d_2$).

In many applications such as UWB, the bandwidth is limited, e.g. by the applied standard. In the present example, the standardized UWB bandwidth of B = 500 MHz has been applied. The distance of a target is estimated based on the measured peaks in the channel response. It can be seen: (A) a large distance error at the self-interference peak, and (B) that the two targets appear as one target and seem un-separable. The distance estimate accuracy as well as the radar resolution directly depend on the applied bandwidth. In the present example, it can be seen that for a bandwidth of 500 MHz, the resolution and accuracy are not high enough. may be quite low. One would like to use the largest bandwidth possible, however this may be limited by hardware and standardization.

**Figure** 9 illustrates large side lobes besides a main lobe in a CIR of a conventional radar device. The y-axis shows the amplitude and the x-axis shows the normalized delay. The main lobe is associated with the actual peak to be determined (main lobe of pulse for target distance estimation), while the side lobes are rather undesired and should be avoided/minimized (desired may be the use of pulses with minimal side lobes). The peak-to-sidelobe-ratio (PSLR, further description below) of a side lobe is in this example around 17 dB, so that the used waveforms exhibit side lobes that can be misclassified.

SUMMARY OF THE DISCLOSURE

There may be a need to improve a radar device, in particular regarding accuracy and/or resolution. A radar device, a method, and a method of using are provided.

According to an aspect of the present disclosure, it is described a radar device, being in particular a monostatic radar device (wherein a transmitter functionality and a receiver functionality are integrated in the same entity, co-located), that comprises:

   i) a first channel (for example channel 5 of the UWB standard) with a first frequency band (e.g. 6 to 7 GHz, centered at 6.5 GHz), configured to receive a first radar signal (e.g. a first reflection of a first radar signal from a transmitter);
   ii) a second channel (for example channel 6 of the UWB standard; in particular adjacent to the first channel) with a second frequency band (e.g. 7 to 8 GHz, centered at 7.5 GHz), configured to receive a second radar signal (e.g. second reflection of a second radar signal from the transmitter) (the first radar signal and the second radar signal may be similar or different), wherein the first frequency band and the second frequency band are different (overlapping or not overlapping); and
   iii) a control device (e.g. a processor, a chip, an integrated circuit, etc.), configured to:

      a) obtain a first channel response (in particular a first channel impulse response and/or a first spectrum) associated with the received first signal at the first channel;
      b) obtain a second channel response (in particular a second channel impulse response and/or a second spectrum) associated with the received signal at the second channel; and

c) combine the first channel response with the second channel response by channel stitching (in particular a subsequent coherent combination) to obtain a combined channel response (in particular a combined spectrum).

According to a further aspect of the present disclosure, it is described a method of operating a radar device (e.g. as described above), being in particular a monostatic radar device, the method comprising:

i) obtaining a first channel response associated with a received first signal at a first channel with a first frequency band;

ii) obtaining a second channel response associated with the received signal at a second channel with a second frequency band,

wherein the first frequency band and the second frequency band are different; and

iii) combining the first channel response with the second channel response for obtaining a combined channel response,

wherein combining comprises channel stitching.

According to a further aspect of the present disclosure, it is described a use (method of using) of channel stitching to improve the channel impulse response (CIR) resolution/accuracy of an ultra-wideband radar device.

In the present context, the term "channel stitching" (or band stitching or spectral stitching) may in particular refer to a process, where multiple pass band signals are combined. Preferably, the stitching may comprise a subsequent and coherent combination of channel impulse responses with different frequency bands.

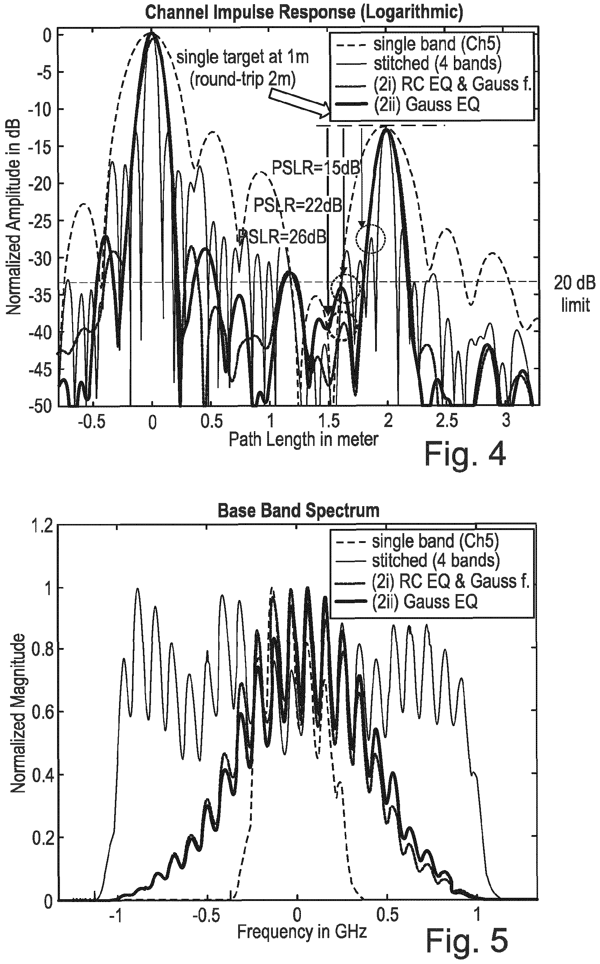

According to an exemplary embodiment, the present disclosure may be based on the idea that the performance of a radar device can be improved, in particular regarding accuracy and/or resolution, when the bandwidth (frequency band) is increased by channel stitching the channel responses of two or more channels of said radar device. In this manner, the bandwidth may be increased significantly (e.g. four times), while the accuracy/resolution may be highly increased, see for example Figures 4 to 9. Based on the increased bandwidth, in a preferred example, additional processing schemes (such as shape filtering) may be applied to reduce side lobes next to a main lobe of the combined (stitched) spectrum, thereby further increasing the performance.

In an embodiment, the present disclosure extends the bandwidth which linearly decreases the deviation of range estimates (tackling issue (A) of Figure 8) and also linearly decreases the resolvable distance between two or more targets (tackling issue (B) of Figure 8).

The aspects defined above and further aspects of the disclosure are apparent from the examples of embodiment to be described hereinafter and are explained with reference to these examples of embodiment. The disclosure will be described in more detail hereinafter with reference to examples of embodiment but to which the disclosure is not limited.

EXEMPLARY EMBODIMENTS

According to an embodiment, first frequency band and the second frequency band are adjacent (neighboring) to each other. In particular, there may be no further frequency band (or channel) in between. In an embodiment, the first channel and the second channel are adjacent channels, for example such as channel 5 and channel 6 of the IEEE standard (for example IEEE 802.15.4-2020, in particular Chapter 15.4.1). In an example, further frequency bands of further channels may also be adjacent. Thereby, an especially efficient channel stitching may be enabled using an existing architecture.

According to an embodiment, the radar device is an ultra-wideband (UWB) radar device. Thereby, an established and economically important standard can be directly applied.

In the context of the present document, the term "ultra-wideband" may refer to a radio technology that can use a very low energy level for short-range, high-bandwidth communications over a large portion of the radio spectrum. UWB may refer to a technology for transmitting information spread over a large bandwidth (e.g. 500 MHz). UWB may be defined as an antenna transmission for which emitted signal bandwidth exceeds the lesser of 500 MHz or 20% of the arithmetic center frequency. UWB transmissions may transmit information by generating radio energy at specific time intervals and occupying a large bandwidth, thus enabling pulse-position or time modulation. The range of UWB may be for example in the range of tens of meters. An UWB (RF) ranging system may employ the Time-of-Flight principle to determine the distance between a mobile device and a target device (e.g. a car to be opened) and/or anchor devices (markers) on the target device. Usually, a transceiver's transmitter sends out a waveform, commonly a chirp or a pulse, which is either reflected by an object or retransmitted by a second transceiver. Based on the amount of time it takes for the reflection or retransmission to reach the originating transceiver's receiver, the distance between the objects can be calculated. The so determined range between the receiver and the transmitter is then used as a control point (to enable access). In the same manner, payload may be transferred using UWB.

In the present context, "UWB" may include impulse-radio-ultra-wideband (IR-UWB) (see for example the standards IEEE802.15.4a and IEEE802.15.4z). In another embodiment, another radar scheme (in particular according to a standard) may be applied, for example based on WiFi, Bluetooth, RFID, etc.

According to an embodiment, the control device is further configured to: calibrate the first channel response and the second channel response, in particular by an alignment (steering φ) process. In order to perform the channel stitching of two or more channel(response)s, an alignment may improve the accuracy and reliability.

According to an embodiment, the first channel response comprises a first self-interference peak and/or the second channel response comprises a second self-interference peak (see e.g. Figure 8). In particular, the calibration/alignment process comprises: align the first self-interference peak and the second self-interference peak. In other words: calibrate the first channel response and the second channel response based on a first phase of the first self-interference peak and/or a second phase of the second self-interference peak. Hereby, the phases (the phase offsets) of the CIRs may be aligned based on the self-interference peaks/phases.

In the context of the present document, the term "self-interference" may refer to a signal that is not caused by the target, but rather from a signal interference within the radar device. An example may be the interference between the transmitter and the receiver of said radar device. Such a self-interference may also be termed spill-over, cross-coupling, cross-talk, etc. A specific example of a self-interference is shown in Figure 8. Within a CIR, one or more self-interference peaks may be visible. Based on one or more self-interference peaks, a self-interference phase may be determined based on which a calibration may be done.

According to an embodiment, the radar device is further configured to process at least one of the first channel response, the second channel response, the combined channel response. Using one or more processing schemes, the radar device output quality (in particular resolution/accuracy) may be further improved. In a preferred example, the processing may reduce/minimize side lobes next to a main lobe in a CIR. In an example, a pre-processing and/or a post-processing may be performed, e.g. based on (spectral) filtering.

According to an embodiment, the processing comprises a filtering to provide a specific/desired pulse shape, for example a Gaussian pulse shape (Gaussian (wave-)form). According to an embodiment, the processing comprises pre-processing at least one of the first channel response and the second channel response by a transformation into a raised-cosine form, in particular before the stitching step. According to an embodiment, the processing comprises applying a Gaussian filter to the combined channel response (in particular after the stitching step). According to an embodiment, the processing comprises post-processing the combined channel response by a transformation to a specific/desired shape, in particular a Gaussian waveform. The described processing steps may be performed individually or (partially) combined with each other. In this manner, side-lobes may be reduced/minimized, see for example Figures 4 to 9.

According to an embodiment, the radar device comprises three or more channels (four or more), wherein the control device is configured to combine respective three or more channel responses by the channel stitching. For example, using four channels, the bandwidth may be four times larger than for a single channel (e.g. 2 GHz instead of 500 MHz).

According to an embodiment, the radar device further comprising:

i) a transmitter to transmit the (first and/or second) radar signal, and
ii) a receiver to receive a reflection (of the one or more targets) of the radar signal. In particular, the receiver comprises the first channel and the second channel. In an example, the receiver comprises a first receiver unit with the first channel and a second receiver unit with the second channel. Thereby, a monostatic radar device may be provided in a straightforward manner.

According to an embodiment, at least one of the first self-interference peak/phase and the second self-interference peak/phase is at least partially generated by a coupling between the transmitter and the receiver.

According to an embodiment, the transmitter is associated with the receiver. According to an embodiment, the transmitter and the receiver share a common antenna. According to an embodiment, the transmitter and the receiver are implemented in the same unit or in different units. According to an embodiment, the transmitter and the receiver are co-located.

According to an embodiment, there is described a radar system, comprising:

i) a radar device as described above; and
ii) a target from which the radar (RF) signal is reflected, wherein the target is a mobile target or an immobile target.

According to an embodiment, the first channel response is a first channel impulse response (CIR) and/or the second channel response is a second CIR. According to an embodiment, the first channel response is associated with a first spectrum and/or the second channel response is associated with second spectrum. According to an embodiment, the combined channel response is associated with a combined spectrum. According to an embodiment, the radar device, in particular the channels, are configured in accordance with an IEEE standard. For example IEEE 802.15.4-2020, Chapter 15.4.1, wherein an RF requirements of the HRP UWB PHY standard is described. These features may enable (alone or in combination), an implementation in technically and economically important applications.

According to an embodiment, the combined channel response has a peak-to-sidelobe-ratio (PSLR) of 20 dB or higher (in particular 30 dB or higher, more in particular 40 dB or higher). In other words, the disclosure may enable a significant reduction of side lobes adjacent to a main lobe in a CIR. Conventionally, UWB radar side lobe reduction methods operate in angle domain, i.e., antenna array processing is applied. However, the present disclosure may work with one-shot CIR measurements. The PSLR can be calculated for example as: PSLR = | s(0) | / | s($\tau_{p1}$) |, wherein $\tau_{p1}$ would be the time of the first sidelobe ($\tau_{p0}$ = 0 main lobe). Positive values (e.g. +20 dB) can be used for the PSLR as it is peak-divided by sidelobe-power.

The given formula assumes that tau=0 is, where the main lobe is situated (see also Figures 4 and 9).

According to an embodiment, the method further comprising: applying the combined channel response to determine a spatial characteristic. Thereby, spatial characteristics may be determined in an efficient and reliable manner. Spatial characteristic may include location/position of the target in space, distance to the target, number of targets, speed of target, etc. Methods such as time difference of arrival (TDoA) or angle of arrival (AoA) may be hereby applied.

In the context of the present document, the term "target" may refer in particular to an entity (e.g. an object, a person, an animal, etc.) to be investigated by radar, in particular regarding a spatial characteristic such as a position, a speed, etc. Accordingly, a "target peak" may be a detected response signal caused by a reflection of a transmitted RF signal from the target. For example, a CIR may be calculated from the reflection of the RF signal and the target peak may be one or more peaks in the CIR that result from the reflection at the target. Based on said target peak, the target phase (phase of the received reflected RF signal) may be determined.

According to an embodiment, multiple (UWB) sub-band measurements are combined, so that in the described radar device, a consecutive switching/sweeping of these bands may be detectable in a straightforward manner.

BRIEF DESCRIPTION OF THE DRAWINGS

Figure 1 illustrates a radar device, according to an exemplary embodiment of the disclosure.

Figure 2 illustrates a first processing scheme before the stitching, according to an exemplary embodiment of the disclosure.

Figure 3 illustrates a second processing scheme after the stitching, according to an exemplary embodiment of the disclosure.

Figures 4 and 6 respectively compare different channel impulse responses, according to exemplary embodiments of the disclosure.

Figures 5 and 7 respectively compare different base band spectra, according to exemplary embodiments of the disclosure.

Figure 8 illustrates a comparison of a channel impulse response from a conventional device and the radar device according to exemplary embodiments of the disclosure.

Figure 9 illustrates a comparison of side lobes besides a main lobe of a conventional device and the radar device according to exemplary embodiments of the disclosure.

DETAILED DESCRIPTION OF THE DRAWINGS

Before referring to the drawings, embodiments will be described in further detail, some basic considerations will be summarized based on which embodiments of the disclosure have been developed.

According to an exemplary embodiment, the disclosure may take UWB channel impulse response (CIR) measurements as inputs to extend the available bandwidth of radar systems in two steps:

1) subsequent coherent combination of multiple bands (channel stitching), involving simple calibration procedures (align self-interference between channels and calibrate phase thereof).

2) spectral shaping filtering as either pre- or post-processing to obtain favorable pulse shapes. Processing may for example comprise:

i) transform the a priori known single band spectra into a raised-cosine (pre-processing) and apply a Gaussian filter after the stitching.

ii) transform the a priori known stitch spectrum to that of a Gaussian waveform (post-processing).

The resulting CIR-based radar signals are comprised of pulses with narrow main-lobes (via step 1) while keeping the side lobes in reasonable bounds (via step 2).

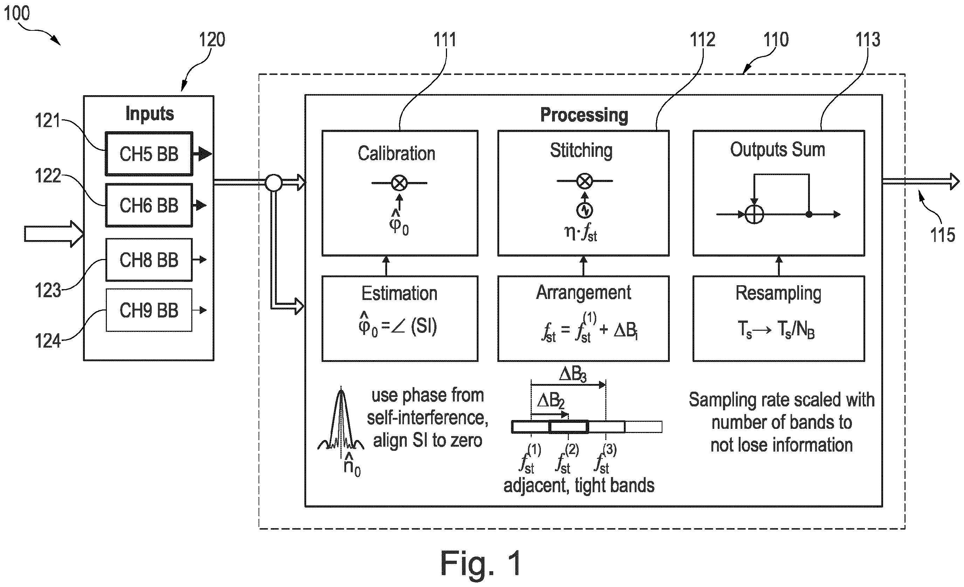

Figure 1 illustrates a radar device 100, according to an exemplary embodiment of the disclosure. The radar device 100 comprises a control device 110 (e.g. one or more processors) coupled (directly or remotely, e.g. wired or wireless) with a plurality of channels 120 (channel inputs). The radar device 100 in this example is an UWB radar device configured to the IEEE standard. A transmitter (not shown in this example) of the radar device 100 is co-located with the receiver, that is illustrated by the input channels 120. The radar device 100 is a monostatic radar device, so that transmitter and receiver 120 are arranged at the same entity. The transmitter transmits one or more radar signals which is/are then reflected by a target. The reflected radar signals are then received by the channels of the receiver 120.

The receiver 120 comprises in this example four channels: a first channel 121 with a first frequency band, a second channel 122 with a second frequency band, a third channel 123 with a third frequency band, and a fourth channel 124 with a fourth frequency band. In this example, the base band channels 5, 6, 8, and 9 of the IEEE standard are applied (channel 7 is not included, as it is a 1 GHz channel with the same center frequency as channel 5). It should be noticed that these channels 121-124 are adjacent to each other, i.e. there is no gap in between regarding the bandwidth. The first channel 121 is configured to receive a first radar signal, the second channel 122 is configured to receive a second radar signal, etc. The radar signals can be the same for the channels or different for each channel 121-124. The first channel 121 measures a first channel response as a first channel impulse response, the second channel 122 measures a second channel response as a second channel impulse response, etc. These cannel impulse responses are then sent to the control device 120.

The control device 110 is configured to obtain said channel impulse responses (CIR) and to combine the first CIR, the second CIR, the third CIR, and the fourth CIR by channel stitching 112 to obtain a combined channel (impulse) response 115, i.e. a combined spectrum, as the output. It can be seen in Figure 1 that the channel stitching 112 is done for adjacent bands based on the number of bands (n) and the center frequency ($f_{st}$): $n*f_{st}$, wherein

$$f_{st} = f^{(1)}_{st} + \Delta B_i$$

In order not to lose information, the sampling rate can be scaled with the number of bands, when calculating the output sum 113, e.g. resampling $T_s$ -> $T_s / N_B$.

Before performing the actual channel stitching 112, there is applied a calibration 111 to align the first CIR, the second CIR, the third CIR, and the fourth CIR with each other. To perform such an alignment, the parameter (steering vector) $\varphi$ needs to be estimated. Since the radar device 100 is in this example a monostatic radar device, wherein transmitter and receiver are co-located, a self-interference peak (SI) can be observed in each CIR, caused by interference between transmitter and receiver (see also Figure 8). The self-interference peak (caused by the same device, i.e. device-specific) is present in all four CIRs, so that said CIR phase offsets can be aligned to zero based on the phase of the self-interference.

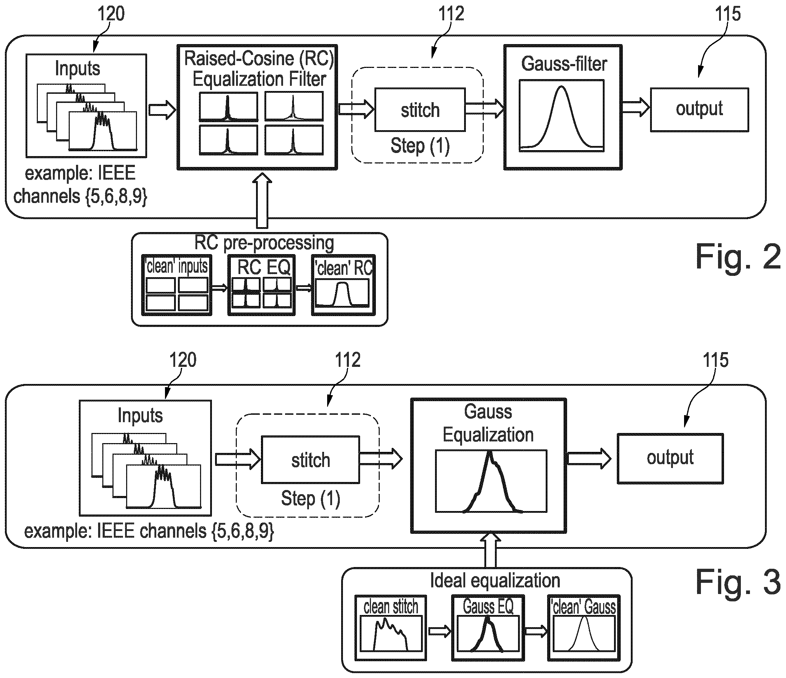

**Figure 2** illustrates a first processing scheme that refers to a processing of the respective CIRs (spectra) before the channel stitching (pre-processing), according to an exemplary embodiment of the disclosure. Each input spectrum (from the respective channels 121-124) is pre-processed by a raised-cosine equalization filter. The single side-band spectrum is known a priori and the RC signals result in a flat stitch spectrum. The bandwidth is chosen such that the support of the channel stitch is covered. After the channel stitching step 112, a Gaussian filter is applied to the combined response to provide the processed combined spectrum 115. This processing scheme enables very low side-lobes in both time and frequency domains.

**Figure 3** illustrates a second processing scheme that refers to a processing of the combined CIR (combined spectrum) after the channel stitching (post-processing), according to an exemplary embodiment of the disclosure. After the stitching step 112, a Gaussian equalization is applied to the combined CIR to obtain a processed combined spectrum 115. Thereby, one can get clean stitch from known single side-band spectra and compensate for non-ideal shape of stitched band (ripple, roll-off).

**Figure 4** shows a four different CIRs to compare a conventional approach with exemplary embodiments of the disclosure. The y-axis shows the normalized amplitude in dB, while the x-axis shows the path length in meters (compare Figure 8 described above). It was performed a one meter cable measurement to emulate a single target, wherein the CIR is measured for one or more IEEE standardized channels over an open cable resulting in reflection (at double length of cable). At 0 meters, there is the self-interference peak, while at 1 m (2 m round-trip), there is located the target.

i) In the first place, only one channel (here channel 5) has been applied (single band), as conventionally done.
ii) Further, according to the disclosure, the adjacent channels 5 to 9 have been used for the channel stitching (four bands).

Additionally, the combined spectrum has been:

iii) processed by the raised-cosine equalization filter (see also Figure 2) and
iv) by the Gauss equalization (see also Figure 3).

It can be seen that resolution and accuracy of the CIRs according to the disclosure (ii to iv) are significantly improved in comparison to the conventional CIR (i).

**Figure 5** shows a base band spectrum corresponding to the CIR measurement of Figure 4. While the conventional spectrum i) covers a bandwidth of 500 MHz, the combined spectra ii) to iv) respectively cover a bandwidth of 2 GHz (four times larger).

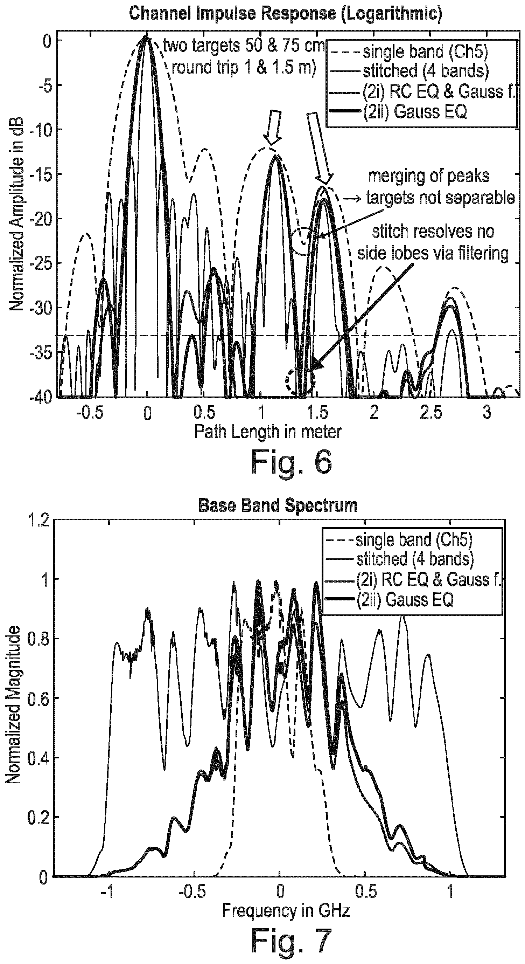

**Figure 6** shows a four different CIRs to compare a conventional approach with exemplary embodiments of the disclosure. In comparison to Figure 4, cables with splitter measurements were applied to emulate a double target (two targets). Therefore, one or more channels were used over two open cables via a splitter (50 cm and 75 cm), to observe target peaks at 0.5 m (1 m round-trip) and 0.75 m (1.5 m round-trip). It can be seen that for the conventional CIR (i), the targets cannot be separated. However, a clear separation (due to higher resolution) is possible with the CIRs according to the disclosure (ii to iv).

**Figure 7** shows a base band spectrum corresponding to the CIR measurement of Figure 6. While the conventional spectrum i) covers a bandwidth of 500 MHz, the combined spectra ii) to iv) respectively cover a bandwidth of 2 GHz (four times larger).

For **Figure 8,** a conventional example has already been described above. However, according to the present disclosure, a bandwidth of B = 2 GHz can be applied and the resolution and accuracy can be clearly improved; in particular, the two targets can be separated and the target distance can be estimated accurately.

For **Figure 9,** a conventional example has already been described above. However, according to the present disclosure, in particular using the described processing scheme, it is enabled to improve resolution and accuracy.

**Claims**

1. A radar device (100) being a monostatic radar device, comprising:

   a first channel (121) with a first frequency band, configured to receive a first radar signal;
   a second channel (122) with a second frequency band, configured to receive a second radar signal, wherein the first frequency band and the second frequency band are different; and
   a control device (110), configured to:

   obtain a first channel response associated with the received first signal at the first channel (121);
   obtain a second channel response associated with the received signal at the second channel (122); and
   combine the first channel response with the second channel response by channel stitching (112) to obtain a combined channel response (115).

2. The radar device (100) according to claim 1, wherein the first frequency band and the second frequency band are adjacent to each other.

3. The radar device (100) according to claim 1 or 2, wherein the radar device (100) is an ultra-wideband, UWB, radar device.

4. The radar device (100) according to one of the preceding claims,
   wherein the control device (110) is further configured to:
   calibrate (111) the first channel response and the second channel response by an alignment process.

5. The radar device (100) according to claim 4,

   wherein the first channel response comprises a first self-interference peak,
   wherein the second channel response comprises a second self-interference peak, and
   wherein the alignment process comprises:
   align the first self-interference peak and the second self-interference peak.

6. The radar device (100) according to one of the preceding claims, wherein the control device (110) is further configured to:
   process at least one of the first channel response, the second channel response, the combined channel response (115).

7. The radar device (100) according to claim 6, wherein the processing comprises a filtering to provide a specific pulse shape.

8. The radar device (100) according to claim 6 or 7, further comprising at least one of the following features:

   pre-process at least one of the first channel response and the second channel response by a transformation into a raised-cosine form;
   apply a Gaussian filter to the combined channel response (115);
   post-process the combined channel response by a transformation to a Gaussian waveform.

9. The radar device (100) according to one of the preceding claims,

   comprising three or more channels (121-124), and
   wherein the control device (110) is configured to combine three or more channel responses by the channel stitching (115).

10. The radar device (100) according to one of the preceding claims, further comprising:

    a transmitter to transmit the radar signal, and
    a receiver to receive a reflection of the radar signal,
    wherein the receiver comprises the first channel (121) and the second channel (122).

11. The radar device (100) according to one of the preceding claims, comprising at least one of the following features:

    wherein the first channel response is a first channel impulse response, CIR;
    wherein the second channel response is a second CIR;
    wherein the first channel response is associated with a first spectrum;
    wherein the second channel response is associated with second spectrum;

wherein the combined channel response is associated with a combined spectrum;
wherein the channels (121, 122) are configured in accordance with an IEEE standard;
wherein the transmitter and the receiver are co-located.

12. The radar device (100) according to one of the preceding claims,
wherein the combined channel response (115) has a peak-to-sidelobe-ratio, PSLR, of 20 dB or higher.

13. A method of operating a radar device (100) being a monostatic radar device, the method comprising:

obtaining a first channel response associated with a received first signal at a first channel (121) with a first frequency band;
obtaining a second channel response associated with the received signal at a second channel (122) with a second frequency band, wherein the first frequency band and the second frequency band are different; and
combining the first channel response with the second channel response for obtaining a combined channel response (115),
wherein combining comprises channel stitching.

14. The method of claim 13, further comprising:
applying the combined channel response (115) to determine a spatial characteristic.

15. Using channel stitching to improve the channel impulse response, CIR, resolution of an ultra-wideband, UWB, radar device.

**Amended claims in accordance with Rule 137(2) EPC.**

1. A radar device (100) being a monostatic radar device, comprising:

a first channel (121) with a first frequency band, configured to receive a first radar signal;
a second channel (122) with a second frequency band, configured to receive a second radar signal, wherein the first frequency band and the second frequency band are different; and
a control device (110), configured to:

obtain a first channel response associated with the received first signal at the first channel (121);
obtain a second channel response associated with the received second signal at the second channel (122);
combine the first channel response with the second channel response by channel stitching (112) to obtain a combined channel response (115);

**characterized in that** the control device (110) is further configured to:

calibrate (111) the first channel response and the second channel response by an alignment process,
wherein the first channel response comprises a first self-interference peak,
wherein the second channel response comprises a second self-interference peak, and
wherein the alignment process comprises:
align the first self-interference peak and the second self-interference peak.

2. The radar device (100) according to claim 1,
wherein the first frequency band and the second frequency band are adjacent to each other.

3. The radar device (100) according to claim 1 or 2,
wherein the radar device (100) is an ultra-wideband, UWB, radar device.

4. The radar device (100) according to one of the preceding claims,
wherein the control device (110) is further configured to: calibrate the first channel response and the second channel response based on a first phase of the first self-interference peak and/or a second phase of the second self-interference peak.

5. The radar device (100) according to one of the preceding claims, wherein the control device (110) is further configured to:
process at least one of the first channel response, the second channel response, the combined channel response (115).

6. The radar device (100) according to claim 5,
wherein the processing comprises a filtering to provide a specific pulse shape.

7. The radar device (100) according to claim 5 or 6, further comprising at least one of the following features:

pre-process at least one of the first channel response and the second channel response by a transformation into a raised-cosine form;
apply a Gaussian filter to the combined channel response (115);
post-process the combined channel response by a transformation to a Gaussian waveform.

8. The radar device (100) according to one of the preceding claims,

comprising three or more channels (121-124), and

wherein the control device (110) is configured to combine three or more channel responses by the channel stitching (115).

9. The radar device (100) according to one of the preceding claims, further comprising:

a transmitter to transmit the radar signal, and a receiver to receive a reflection of the radar signal,

wherein the receiver comprises the first channel (121) and the second channel (122).

10. The radar device (100) according to one of the preceding claims,

wherein the first channel response is a first channel impulse response, CIR, and wherein the second channel response is a second CIR.

11. The radar device (100) according to claim 10, wherein the control device (110) is further configured to: align the phases, in particular the phase offsets, of the CIRs based on the self-interference peaks and/or phases.

12. The radar device (100) according to one of the preceding claims, comprising at least one of the following features:

wherein the first channel response is associated with a first spectrum; wherein the second channel response is associated with second spectrum; wherein the combined channel response is associated with a combined spectrum; wherein the channels (121, 122) are configured in accordance with an IEEE standard; wherein the transmitter and the receiver are co-located.

13. The radar device (100) according to one of the preceding claims, wherein the combined channel response (115) has a peak-to-sidelobe-ratio, PSLR, of 20 dB or higher.

14. A method of operating a radar device (100) being a monostatic radar device, the method comprising:

receiving a first radar signal and obtaining a first channel response associated with the received first signal at a first channel (121) with a first frequency band; receiving a second radar signal and obtaining a second channel response associated with the received second signal at a second channel (122) with a second frequency band, wherein the first frequency band and the second frequency band are different; and combining the first channel response with the second channel response for obtaining a combined channel response (115), wherein combining comprises channel stitching; **characterized in that** the method further comprises: calibrating (111) the first channel response and the second channel response by an alignment process,

wherein the first channel response comprises a first self-interference peak, wherein the second channel response comprises a second self-interference peak, and wherein the alignment process comprises: aligning the first self-interference peak and the second self-interference peak.

15. The method of claim 14, further comprising: applying the combined channel response (115) to determine a spatial characteristic.

Fig. 1

Fig. 2

Fig. 3

EP 4 538 735 A1

## Channel Impulse Response (Logarithmic)

Fig. 4

## Base Band Spectrum

Fig. 5

Fig. 6

Fig. 7

Fig. 8

Fig. 9

**EUROPEAN SEARCH REPORT**

Europäisches Patentamt
European Patent Office
Office européen des brevets

Application Number

EP 23 20 3265

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 169 358 B1 (BOURDELAIS JOHN MICHAEL [US]; AMAN AHMAD KHALID [US] ET AL.) 1 May 2012 (2012-05-01) | 1-4,6-15 | INV. G01S7/40 G01S13/02 |
| A | * abstract * * column 2, line 55 - column 12, line 52; figures 1-4 * | 5 | G01S13/06 G01S13/08 |
| X | CN 114 200 421 A (UNIV HARBIN ENG) 18 March 2022 (2022-03-18) | 1-4,6, 9-15 | |
| A | * abstract * * paragraphs [0001] - [0068]; figures 1-6 * | 5,7,8 | |
| X | CN 103 630 878 A (CHINESE ACAD INST ELECTRONICS) 12 March 2014 (2014-03-12) | 1-4,6-15 | |
| A | * abstract * * paragraphs [0001] - [0089]; figures 1,2 * | 5 | |

TECHNICAL FIELDS SEARCHED (IPC)

G01S

The present search report has been drawn up for all claims

| Place of search | Date of completion of the search | Examiner |
|---|---|---|
| Munich | 20 March 2024 | van Norel, Jan |

EPO FORM 1503 03.82 (P04C01)

## ANNEX TO THE EUROPEAN SEARCH REPORT
## ON EUROPEAN PATENT APPLICATION NO.

EP 23 20 3265

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2024

| Patent document cited in search report | | Publication date | Patent family member(s) | Publication date |
|---|---|---|---|---|
| US 8169358 | B1 | 01-05-2012 | NONE | |
| CN 114200421 | A | 18-03-2022 | NONE | |
| CN 103630878 | A | 12-03-2014 | NONE | |

EPO FORM P0459

For more details about this annex : see Official Journal of the European Patent Office, No. 12/82